# EUROPEAN PATENT APPLICATION

(11) **EP 3 885 328 A1**
(43) Date of publication of application: **29.09.2021**
(21) Application number: 21159247.2
(22) Date of filing: 25.02.2021
(51) Int. Cl.: C04B 35/52, C04B 35/573, C04B 35/83

(54) **CARBON COMPONENT WITH CONTROLLED VIBRATION RESISTANCE**

(30) Priority: 27.03.2020 US 202063000729 P; 08.01.2021 US 202117144439
(71) Applicant: Hamilton Sundstrand Corporation, Charlotte, NC 28217-4578 (US)
(72) Inventor: LU, Weiming, Akron, CT Connecticut 44321 (US); FIALA, Robert, Spokane, WA Washington 99203 (US); LINCK, John, Pueblo, CO Colorado 81001 (US); SIMPSON, Scott W., Feeding Hills, MA Massachusetts 01030 (US); ZAWILINSKI, David J., W. Granby, CT Connecticut 06090 (US)
(74) Representative: Dehns

(57) **Abstract**

A method for making a component includes the steps of providing a preform formed of carbon fibers. A first densification is performed forming a carbon composite. A first hardening of the carbon composite is performed. The method machines the carbon composite to form a shape. The method then performs a second densification and a second hardening. The method then final machines the carbon composite to form a final shape of the component.

## Description

### CROSS-REFERENCE TO RELATED APPLICATIONS

This application claims priority to United States Provisional Application No. 63/000,729 filed March 27, 2020.

### BACKGROUND

This application relates to methods of making components.

A gas turbine engine typically includes a compressor section in fluid communication with one or more bleed valves. During engine start-up, a bleed valve changes between opened and closed positions depending on pressure within the compressor. The bleed valve is driven to the opened and closed positions with help from a piston at low and high operating pressures, allowing air entering the compressor to be compressed and delivered to engine components.

The piston is typically made of a heavy metal based alloy and therefore often experiences vibration and wear life complications.

### SUMMARY

A method for making a component includes the steps of providing a preform formed of carbon fibers. A first densification is performed forming a carbon composite. A first hardening of the carbon composite is performed. The method machines the carbon composite to form a shape. The method then performs a second densification and a second hardening. The method then final machines the carbon composite to form a final shape of the component.

### BRIEF DESCRIPTION OF THE DRAWINGS

Figure 1A shows an example preform.
Figure 1B shows a step of densifying the example preform of Figure 1A to obtain a composite.
Figure 1C shows a step of hardening the example composite of Figure IB.
Figure 1D shows a pre-machining step.
Figure 1E shows a further step of densifying the composite.
Figure 1F shows a further step of hardening the composite.
Figure 1G shows a final machining step.

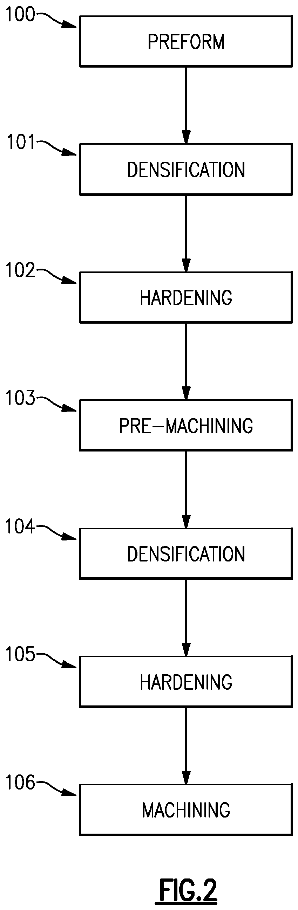

Figure 2 shows a process flow chart to create the component using the described method.

### DETAILED DESCRIPTION

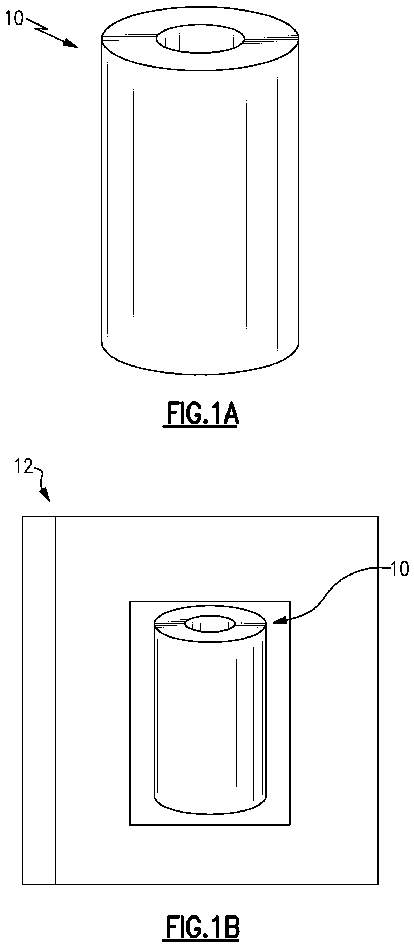

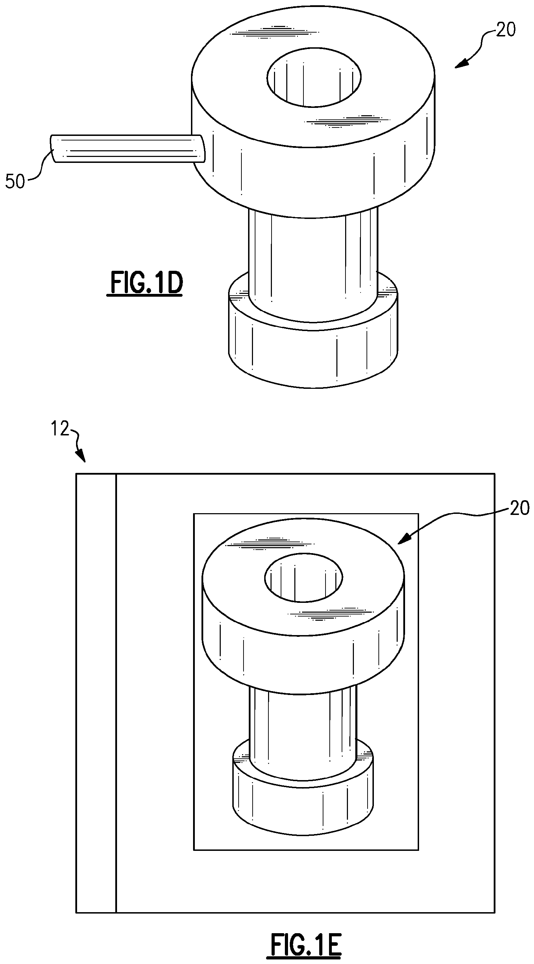

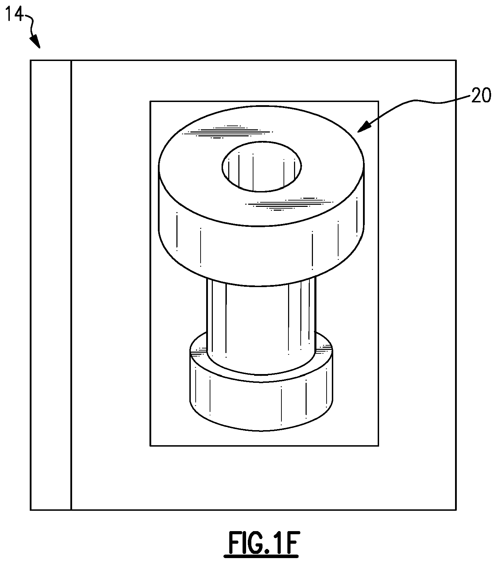

A preform 10 is illustrated in Figure 1A. The preform 10 may be formed of carbon fibers or oxidized fibers made via a fiber needling process for example. Within the x- and y-plane, fibers can be oriented in any direction. In one example, a first layer of fibers can be oriented at 0 degrees, a second layer of fibers can be oriented at +/- 45 degrees, and a third layer of fibers can be oriented at +/- 90 degrees. Between the layers, the fiber needling process can be used to "punch" the layers together. After punching, fibers in the z-direction can hold the layers together, forming a preform. Fibers may be woven or discontinuous.

The carbon fibers may include polyacrylonitrile (PAN), rayon carbon fiber, and pitch-based carbon fiber, which includes isotropic pitch carbon fiber and mesophase pitch carbon fiber. In one example, the carbon fiber is PAN forming a 3D preform. In another example, PAN can form a 2.5D preform. 2.5D can be referred to as a 3D structure that is restricted to the second dimension. That is, the second dimension capable of showing only a limited portion of the 3D structure. For example, a 2.5D preform has a lesser thickness in the iz-direction increases, the preform progresses towards a 3D structured preform. Both the 2.5D and 3D preforms may have a structure capable of infiltration.

The preform 10 is typically a shape and size that can be efficiently machined to a desired final shape. As shown in Figure 1A, the preform may be a solid cylinder. However, the preform may be many other shapes, selected based upon a final desired shape.

As shown in Figure 1B, densification of the preform 10 occurs in system 12. Densification can be accomplished by methods such as chemical vapor infiltration (CVI) and/or pitch infiltration. Of course other methods can be used.

CVI is a process of introducing a matrix material carried by a gas into the system. With time the matrix material will infiltrate and subsequently "build-up" on the preform, thus reducing open porosity and sealing the surface.

An example of pitch infiltration is a process of introducing solid pitch powder around the preform and heating the pitch to a temperature slightly above its melting temperature in the system having a controlled nitrogen or argon atmosphere. Heating helps to manage pitch viscosity which can be used to guide the melted pitch to fill open porosity of the preform. Pressure and/or vacuum can also be used to guide or facilitate infiltration of the pitch and manage fiber orientation in the preform. The process further includes reducing the temperature below 100 °C to solidify the pitch. Next, the pitch may be stabilized by again heating the pitch below or close to its melting point. Stabilization converts the pitch from thermoplastic to thermoset, which allows the preform to undergo carbonization without subsequently melting. Accordingly, the preform is carbonized at a range of 1300 - 3000 °C to help release byproducts of the pitch. Note, yield of the pitch during carbonization is over 80%, generally. This means at least 80% of the pitch remains in the preform, after carbonization. Such a yield can leave subsequent open porosity. A single pitch infiltration can significantly reduce open porosity, but multiple pitch infiltrations can reduce open porosity to less than 5% in some cases.

In this example, CVI can be performed using rough laminar (RL) pyrocarbon as the matrix material and/or pitch infiltration can be performed using mesophase pitch. Both RL pyrocarbon and mesophase pitch are graphitizable forms of carbon which can be useful in managing carbon structure. Mesophase pitch is a carbonaceous liquid crystal state in which molecular groups are regularly oriented so as to show optical anisotropy. This feature manages its crystal orientation to the direction desired and manages its crystal size at liquid state and further manages its graphitization degree after carbonization and/or graphitization.

The preform 10 is densified to a density range of 1.60 - 1.75 g/cm³ in one example. The preform 10 may now be considered a carbon composite 20. At this stage, composite surface porosity has been considerably reduced.

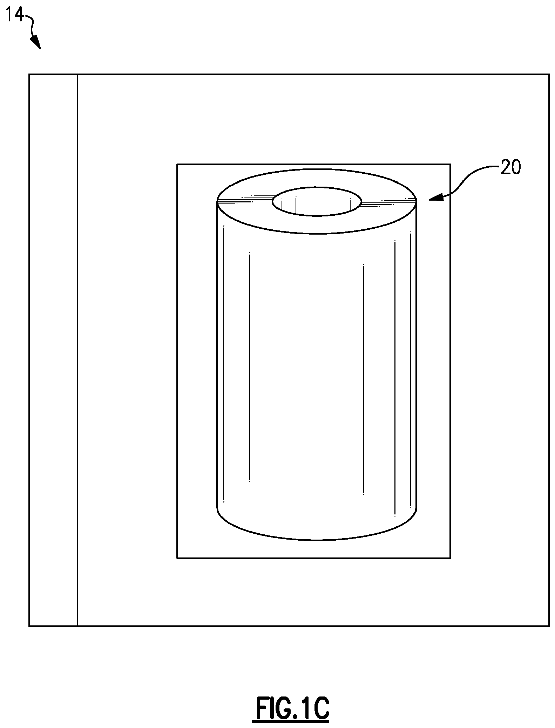

As shown schematically in Figure 1C, the carbon composite 20 undergoes a first hardening step. The composite 20 is treated in a system 14 having an inert, controlled atmosphere. The system 14 may be an oven or other suitable apparatuses. In this example, hardening is accomplished using carbonization by introducing a carbon-bearing material into the system at a temperature range of 1300 °C - 3000 °C, thus allowing the preform to absorb carbon from the carbon-rich environment and creating a carbon matrix. Open porosity of the composite can be managed from 25% to 10%, allowing further densification.

Referring to Figure ID, the carbon composite 20 is machined using tool 50 to form a shape of the composite that is closer to a final desired shape. Any machining technique known in the art can be utilized here. In general, machining helps reduce the size of the composite 20, and thus also helps facilitate subsequent final densification. Note, if composite size remains relatively large, final densification can become more difficult to achieve.

In Figure IE, the carbon composite 20 undergoes final densification at 12. Final CVI densification can be performed to further reduce open porosity and seal the surface of the composite 20. Alternatively, final pitch infiltration can be performed to further reduce open porosity and seal the surface of the composite 20. Also, silicon melt infiltration may be used.

As shown in Figure IF, final hardening can be performed at 14 by carbonization, graphitization, to help manage composite properties related to vibration control. Graphitization can occur when the composite is exposed to a carbon-rich environment at elevated temperatures for a long period of time, thus transforming the carbon matrix into a graphite matrix. Silicon melt infiltration is a process of introducing molten silicon-at high temperatures, say 1450 °C-to the composite substrate. Open porosity of the composite is subsequently infiltrated by the molten silicon which reacts with the carbon matrix of the composite to form silicon carbide (SiC) at carbon interfaces of the carbon matrix, leaving 5 - 20% residual silicon metal. Residual open porosity of the composite after silicon melt infiltration can be as low as 1 - 2%. Notably, silicon melt infiltration can provide a composite with improved oxidation protection and toughness as compared to the original preform. After final hardening, the composite has achieved a density range of 1.75 - 2.60 g/cm³.

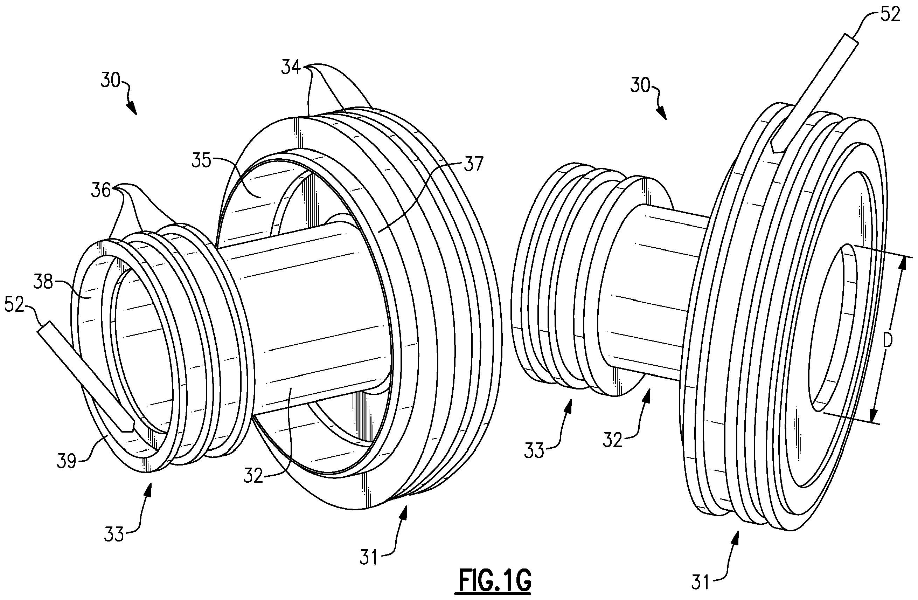

A carbon composite 30 is shown schematically in Figure 1G being machined with tool 52 to form a shape of the composite in accordance with the desired final shape. A typical mechanical carbon composite machining technique can be used here. The final shape should be a shape useful for a desired application. In this example, the composite 30 is the shape of a piston for a bleed valve of a gas turbine engine.

In this example, the carbon composite 30 includes an upper portion 31, an intermediate portion 32, and a lower portion 33. Each of the portions 31-33 have a cylindrical shape with an inner diameter D. Notably, the upper portion 31 has an outer diameter substantially larger in comparison to that of the intermediate portion 32 and lower portion 33. Furthermore, the lower portion 33 has an outer diameter intermediate in size compared to that of the intermediate portion 32 and upper portion 31.

Along the lateral edge of the upper portion 31, a plurality of protrusions 34 are defined by grooves. A lip 37, defined by pocked 35, is shown extending radially from the radial face of the upper portion.

Similarly, along the lateral edge of the lower portion 33, a plurality of protrusions 36 are defined by grooves; and a lip 39, defined by pocket 38, extends radially from the radial face of the lower portion.

The densification and hardening steps described above can be used to obtain a carbon matrix of the carbon composite 30 with an improved storage modulus and, thus, improved vibration resistance. The first densification provides a baseline material for continued densification. The baseline material allows two different densification processes to be used. CVI allows quick surface infiltration, capable of sealing open porosity of the surface of the preform. The sealing the surface of the composite via CVI densification enables the composite to sustain pressures experienced under standard operating conditions. Pitch infiltration allows full infiltration from the inside of the composite to the surface of the composite, thus filling all open porosity. In light of this invention, a specific densification process can be chosen to meet the needs of a particular application. For some applications, all open porosity may need to be filled instead of just filling surface open porosity, especially for applications that require substantial vibration resistance.

Compared to current pistons, the method described above can obtain a composite having at least 75% reduced weight by replacing typical metal components with a carbon composite. The method can achieve a vibration resistance increase of 300% - 400% because by nature of the carbon composite, the crystal structure can be changed via high temperature carbonization and/or graphitization to manage composite damping (storage modulus). Both rough laminar pyrocarbon CVI and mesophase pitch infiltration enable composite structures changeable to or close to graphite with high temperature carbonization or graphitization. Notably, as degree of graphitization increases, the storage modulus of the composite increases. A 100% increase in wear life can also be achieved by managing the carbon composite crystal structure and high temperature carbonization. As the structure changes to or close to graphite, the composite can exhibit lubricant characteristics. Furthermore, composite redesign flexibility can be increased in comparison to typical metal components. For example, in metal pistons, a carbon/graphite ring is required on the edge for sealing purposes. A carbon/graphite composite piston eliminates the need for such a ring because the composite piston is an inherently good sealing material.

The foregoing description shall be interpreted as illustrative and not in any limiting sense. A person of ordinary skill in the art would understand that certain modifications could come within the scope of this disclosure. For these reasons, the following claims should be studied to determine the true scope and content of this disclosure.

## Claims

1. A method for making a component comprising:
providing a preform formed of carbon fibers;
performing a first densification forming a carbon composite;
performing a first hardening of the carbon composite;
machining the carbon composite to form a shape;
then performing a second densification and performing a second hardening; and
then final machining the carbon composite to form a final shape of the component.

2. The method as recited in claim 1, wherein the component is a piston for a valve.

3. The method as recited in claim 1 or 2, wherein the first hardening is performed using carbonization and the second hardening is performed using carbonization, graphitization, or silicon melt infiltration.

4. The method as recited in any preceding claim, wherein both the first and second densifications are performed using at least one of chemical vapor infiltration and/or pitch infiltration.

5. The method as recited in claim 4, wherein said chemical vapor infiltration is used and includes a rough laminar pyrocarbon matrix material and/or wherein both the first and second densifications are performed using pitch infiltration and includes mesophase pitch.

6. The method as recited in any preceding claim, wherein the first hardening and second hardening are performed in a temperature range between 1300 °C - 3000 °C.

7. The method as recited in any preceding claim, wherein a density range of about 1.60 - 1.75 g/cm³ is achieved after the first densification.

8. The method as recited in any preceding claim, wherein the carbon composite has a 1.60 - 1.75 g/cm³ density range after the first densification, and preferably wherein both the first and second densifications are performed by chemical vapor infiltration using rough laminar pyrocarbon and/or pitch infiltration using mesophase pitch, and/or silicon melt infiltration.

9. The method as recited in any preceding claim, wherein the carbon fibers include at least one of polyacrylonitrile, rayon carbon fibers, and pitch-based carbon fiber, and preferably wherein the preform is a 2.5D or 3D structure.

10. The method as recited in any preceding claim, wherein the preform is a 2.5D or 3D structure.

11. The method as recited in any preceding claim, wherein the final shape is a piston for a bleed valve.

12. The method as recited in any preceding claim, wherein at least one of the first and second densification is performed using pitch infiltration and the pitch infiltration includes heating a solid pitch powder to its melting point, filling open porosity of the preform with the melted pitch, cooling the pitch to a temperature below 100 °C to solidify the pitch, stabilizing the pitch by heating it to its melting point, and carbonizing the preform in a temperature range of 1300 °C - 3000 °C, and preferably wherein after carbonizing, the preform has a yield over 80%.

13. The method as recited in any preceding claim, wherein a density range of 1.75 - 2.60 g/cm³ is achieved after the second densification and the second hardening.

14. The method as recited in any preceding claim, wherein the composite has an open porosity of less than 15% after the first densification.

15. A method for making a component comprising:
providing a 2.5D or 3D preform formed of polyacrylonitrile carbon fibers;
then performing a first densification to form a carbon composite, with a density of the composite between 1.60 - 1.75 g/em³;
then performing a first hardening of the carbon composite by carbonization and/or graphitization at a temperature range between 1300 °C - 3000 °C;
then machining the carbon composite to form a shape;
then performing a second densification;
then performing a second hardening, wherein a density range of 1.75 - 2.60 g/cm³is achieved; and
then final machining the carbon composite to form a final shape of the component;
wherein both the first and second densifications are performed using one of chemical vapor infiltration and pitch infiltration, if selected, the chemical vapor infiltration including rough laminar pyrocarbon, and if selected, the pitch infiltration including mesophase pitch;
wherein the second hardening is performed using one of carbonization, graphitization, or silicon melt infiltration;
wherein the final shape is a shape of a piston for a valve.
